# EUROPÄISCHE PATENTANMELDUNG

(11) **EP 1 279 845 A1**
(43) Veröffentlichungstag der Anmeldung: **29.01.2003**
(21) Anmeldenummer: 02005803.8
(22) Anmeldetag: 14.03.2002
(51) Int. Cl.: F16C 27/02

(54) **Flexible Lageraufhängung für ein Sintergleitlager**

(30) Priorität: 24.07.2001 DE 10136023
(71) Anmelder: ROBERT BOSCH GMBH, 70442 Stuttgart (DE)
(72) Erfinder: Dornhoefer, Gerd, Dr., 71229 Leonberg (DE); Koch, Hans-Peter, Dr., 70435 Stuttgart (DE); Vogt, Andreas, Dr., 71272 Renningen (DE); Stehr, Werner, 72160 Horb-Ahldorf (DE)

(57) **Zusammenfassung**

Es wird eine flexible Aufhängung für ein Sintergleitlager (10) vorgeschlagen, wobei aus einer Platte (15) eine zumindest weitgehend freitragende, mit mindestens einem Steg (13) mit der Platte (15) verbundene Haltestruktur (12, 18) herausstrukturiert worden ist, von der das Sintergleitlager (10) gehalten wird. Bevorzugt ist vorgesehen, das Sintergleitlager (10) in die erste Haltestruktur (18) einzusetzen, die zumindest weitgehend freitragend über zwei, einander gegenüber liegende erste Stege (13) mit einer zweiten Haltestruktur (12) verbunden ist, die wiederum über zwei, einander gegenüber liegende zweite Stege (14) mit der Platte (15) verbunden ist. Dabei verläuft die von den ersten Stegen (13) gebildete Achse senkrecht zu der von den zweiten Stegen (14) gebildeten Achse.

## Beschreibung

Die Erfindung betrifft eine Aufhängung für ein Sintergleitlager nach der Gattung des Hauptanspruchs.

### Stand der Technik

Bei Sintergleitlagern, wie sie beispielsweise aus DE 199 37 567 A1 bekannt sind, müssen zum Ausgleich von Fertigungstoleranzen bei der Fluchtung von Lager und darin gelagerter Welle Maßnahmen getroffen werden, die eine Ausrichtung des Sintergleitlagers an der Welle ermöglichen. Fällt diese Angleichung der Lagerachse an die Wellenachse zu gering aus, kommt es bereits bei sehr kleinen Winkelabweichungen zwischen Lagerachse und Wellenachse zu sogenannten "Kantenläufern", die in der Sintergleitlagerbohrung an zwei diagonal gegenüber liegenden Punkten an den Lagerrändern zu hohen Flächenpressungen führen. Diese Flächenpressungen verhindern, dass das Sintergleitlager vollständig im hydrodynamischem Betriebszustand betrieben werden kann, d.h. es kommt durch bereichsweise auftretende Mischreibung zu einem erhöhten Verschleiß und einer beschleunigten Schmierstoffalterung.

Bekannte Sintergleitlager sind weiter vielfach in Kalottenform ausgebildet, und werden in ein ebenfalls kalottenförmig gestaltetes Lagerschild eingesetzt und durch eine Klemmbrille fixiert. Dabei drückt die Klemmbrille das Lager im Wesentlichen mit Hilfe von mehreren Federzungen in die Kalotte des Lagerschildes, so dass das Sintergleitlager, da es nur über Kraftschlusselemente wie einen ringförmigen Linienkontakt zwischen Lagerflansch und Kalotte sowie Linienkontakte an den Federzungen fixiert ist, bei Betrieb im Prinzip in der Schildkalotte kippen kann. Bei dieser Fixierung muss die Spannung der Federzungen andererseits so groß sein, dass ein Mitdrehen des Sintergleitlagers mit der darin gelagerten Welle verhindert wird, d.h. die Federzungen sollen ein Kippen des Sintergleitlagers ermöglichen und gleichzeitig ein Mitdrehen verhindern, was nur schwer in Einklang zu bringen ist.

Nachteilig bei der erläuterten Aufhängung des Sintergleitlager ist überdies, dass die notwendigen Verstellmomente, d.h. die Reibkontakte im Lagerschild und an den Federzungen, sehr schlecht definiert sind und daher einer großen Streuung unterliegen. Insbesondere ist für die Ausrichtung des Sintergleitlagers zunächst ein Losbrechmoment notwendig, das in der Regel deutlich größer ist als das eigentliche Verstellmoment. Zudem erlaubt die relativ aufwendige Konstruktion mit voluminösen Kalottenlagern, kalottenförmigen Lagerschilden und Klemmbrillen zwar Verstellwinkel von weit mehr als 10 Grad, diese sind jedoch bei den heutigen Fertigungstoleranzen von typischerweise 0,1 mm auf eine Gesamtlänge der Welle von 100 mm gar nicht mehr erforderlich. Schließlich ist bei der bisher bekannten Aufhängung von Sintergleitlagern nachteilig, dass in dem Sintergleitlager entstehender Körperschall vielfach sehr gut auf das umgebende Gehäuse übertragen wird.

### Vorteile der Erfindung

Die erfindungsgemäße Aufhängung für ein Sintergleitlager hat gegenüber dem Stand der Technik den Vorteil, dass schon bei relativ kleinen Verstellmomenten, die von der Welle auf das Sintergleitlager ausgeübt werden, eine Ausrichtung des Sintergleitlagers innerhalb der Aufhängung möglich ist. Insbesondere sind die dabei auftretenden Verstellmomente klein und definiert. Daneben weist die erfindungsgemäße Aufhängung für ein Sintergleitlager eine deutlich vereinfachte Konstruktion und einen verringerten Materialaufwand auf.

Weiterhin hat die erfindungsgemäße Aufhängung den Vorteil, dass verringerte Flächenpressungen an Lagerkanten des Sintergleitlagers auftreten, so dass dieses nun eher im hydrodynamischen Betriebszustand läuft. Dadurch verringern sich Verschleiß und Eigenerwärmung des Lagers und somit auch die Schmierstoffalterung.

Darüber hinaus besitzt die erfindungsgemäß Aufhängung auch eine Flexibilität in axialer Richtung, d.h. parallel zu der gelagerten Welle, und kann daher Geräusche wie beispielsweise durch Stöße, die bei einem Anlauf von Ankerpaketen an das Lager auftreten, reduzieren. Zudem ist es nun in einfacher Weise möglich, auch eine Körperschallausbreitung beispielsweise durch ein Umspritzen der Aufhängung mit Kunststoffen zu behindern bzw. zu dämpfen, und so insbesondere eine Übertragung dieser Geräusche auf ein Motorgehäuse einzuschränken.

Ein wesentlicher Vorteil der erfindungsgemäßen Aufhängung für ein Sintergleitlager liegt schließlich darin, dass keine voluminösen Kalottenlager mehr erforderlich sind, so dass nun auch kleinere und leichtere Zylinderlager als Sintergleitlager eingesetzt werden können, was insbesondere auch die erforderliche Tränkölmenge reduziert. Zudem muss nun keine auf die jeweilige Lagergeometrie abgestimmte Kalottenform mehr eingesetzt werden, d.h. die erfindungsgemäße Aufhängung ist wesentlich einfacher standardisierbar und es entfallen auch ansonsten übliche Klemmbrillen.

Vorteilhafte Weiterbildungen der Erfindung ergeben sich aus den in den Unteransprüchen genannten Maßnahmen.

So ist besonders vorteilhaft, dass bei der Aufhängung des Sintergleitlagers das bisher übliche Lagerschild durch eine gestanzte Blechplatte ersetzbar ist, die aufgrund ihrer Geometrie, insbesondere über vier näherungsweise halbkreisringförmige Aussparungen, ein Verkippen des im Zentrum der Aussparungen angeordneten Sintergleitlagers erlaubt.

Weiterhin kann bei der erfindungsgemäßen Aufhängung in einfacher Weise durch einen Formschluss zwischen Sintergleitlager und der mit der Platte verbundenen Haltestruktur ein Mitdrehen des Sintergleitlagers mit der darin gelagerten Welle verhindert werden. Besonders vorteilhaft wird dieser Formschluss durch eine Nut und einen zugeordneten Steg erreicht, wobei bevorzugt das Sintergleitlager die Nut aufweist, und der Steg in die Haltestruktur integriert ist.

Somit kann die Funktion "Verkippen" nun vorteilhaft von der Funktion "Mitdrehen verhindern" getrennt werden, d.h. es tritt anders als bei kalottenförmigen Sintergleitlagern mit entsprechenden kalottenförmigen Lagerschilden keine nennenswerte gegenseitige Beeinflussung dieser Funktionen mehr auf.

Vorteilhaft ist zudem, dass die Flexibilität der Aufhängung des Sintergleitlagers über die Materialauswahl des Bleches bzw. der Platte und die Breite der Stege, die die Platte mit den Haltestrukturen bzw. die Haltestruktur untereinander verbinden, stufenlos einstellbar ist. Insbesondere ist die als Lageraufhängung dienende strukturierte Platte nunmehr einstückig als Stanzteil herstellbar, in die das Sintergleitlager eingesetzt und dort federnd gelagert ist.

Eine besonders vorteilhafte Aufhängung ergibt sich schließlich, wenn das Sintergleitlager in eine erste Haltestruktur eingesetzt ist, die zumindest weitgehend freitragend über zwei, einander gegenüber liegende erste Stege mit einer zweiten Haltestruktur verbunden ist, die wiederum über zwei, einander gegenüber liegende zweite Stege mit der Platte verbunden ist. Dabei verläuft weiter die von den ersten Stegen gebildete Achse senkrecht zu den von den zweiten Stegen gebildeten Achse. Auf diese Weise erhält man eine weitgehend freitragende, flexible und federnde Aufhängung des Sintergleitlagers im Zentrum der das Sintergleitlager konzentrisch umgebende Haltestrukturen, wobei durch die zueinander senkrecht orientierten Achsen der Stege eine einer halben kardanischen Aufhängung vergleichbare Aufhängung gewährleistet wird.

### Zeichnungen

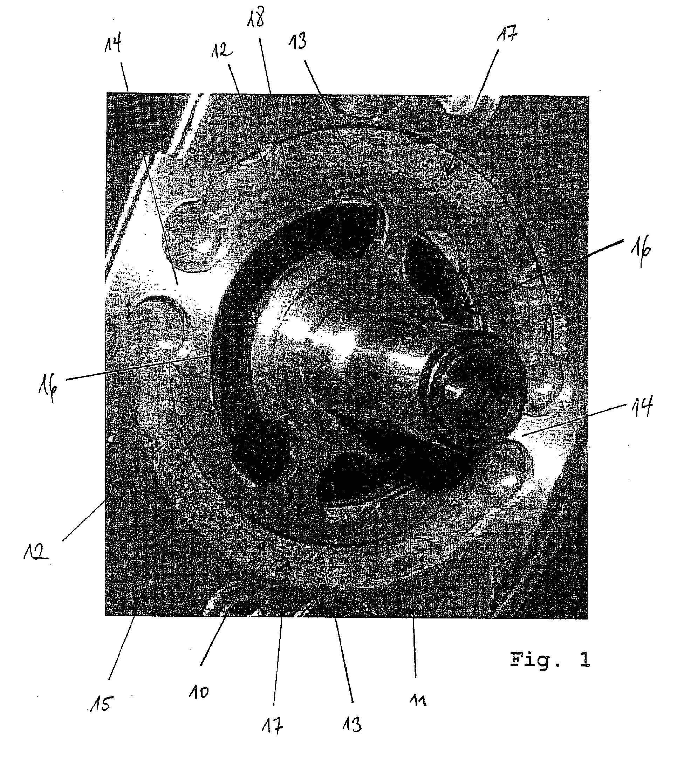

Die Erfindung wird anhand der Zeichnung und mit der nachfolgenden Beschreibung näher erläutert. Es zeigt Figur 1 ein mit Hilfe einer strukturierten Platte an einem Tragkörper aufgehängtes Sintergleitlager mit einer darin gelagerten Welle.

### Ausführungsbeispiel

Die Figur 1 zeigt zunächst ein übliches hohlzylinderförmiges Sintergleitlager 10, durch das eine Welle 11 gelagert ist, die im unbelasten Zustand senkrecht zu der Ebene des Sintergleitlagers 10 orientiert ist. Daneben ist eine mit einem Tragkörper, einer Halterung oder einem Gehäuse verbundene Blechplatte 15 vorgesehen, in die zwei näherungsweise halbkreisringförmige zweite Aussparungen 17 eingebracht sind, die auf einem äußeren Kreis verlaufen, wobei beim Erzeugen der zweiten Aussparungen 17 zweite Stege 14 stehen geblieben sind.

Schließlich wurden in die Platte 15 gemäß Figur 1 zwei weitere, halbkreisringförmige erste Aussparungen 16 eingebracht, die auf einem Kreis verlaufen, dessen Radius gegenüber dem Radius des äußeren Kreises geringer ist. Zudem wurde im Zentrum des äußeren Kreises bzw. des dazu konzentrisch verlaufenden inneren Kreises eine Bohrung in die Platte 15 eingebracht, in die danach das Sintergleitlager 10 parallel zu Ebene der Platte 15 formschlüssig eingesetzt, beispielsweise eingepresst worden ist. Im Übrigen wurden auch die ersten Aussparungen 16 derart erzeugt, dass erste Stege 13 stehen geblieben sind. Die im Bereich der Stege endenden ersten halbkreisringförmige Aussparungen 16 und zweiten halbkreisringförmige Aussparungen 17 sind überdies bevorzugt dort mit gegenüber der Breite der Aussparungen 16, 17 etwas vergrößerten Bohrungen versehen, die die mechanische Stabilität und Belastbarkeit verbessern.

## Patentansprüche

1. Aufhängung für ein Sintergleitlager (10) mit einer Platte (15), aus der eine zumindest weitgehend freitragende, mit mindestens einem Steg (13) mit der Platte (15) verbundene Haltestruktur (12, 18) herausstrukturiert worden ist, wobei das Sintergleitlager (10) von der Haltestruktur (12, 18) gehalten ist.

2. Aufhängung nach Anspruch 1, **dadurch gekennzeichnet, dass** die Haltestruktur (12, 18) eine zumindest näherungsweise ringförmige Struktur (18) aufweist, die das Sintergleitlager (10) zumindest weitgehend umgibt.

3. Aufhängung nach Anspruch 1 oder 2, **dadurch gekennzeichnet, dass** die Haltestruktur (12, 18) über zwei, einander gegenüber liegende Stege (13, 14) mit der Platte (15) verbunden ist.

4. Aufhängung nach einem der vorangehenden Ansprüche, **dadurch gekennzeichnet, dass** eine erste, aus der Platte (15) herausstrukturierte Haltestruktur (18) und eine zweite, aus der Platte (15) herausstrukturierte Haltestruktur (12) vorgesehen ist, wobei das Sintergleitlager (10) in die erste Haltestruktur (18) eingesetzt ist, die über mindestens einen ersten Steg (13) zumindest weitgehend freitragend mit der zweiten Haltestruktur (12) verbunden ist, und dass die zweite Haltestruktur (12) über mindestens einen zweiten Steg (14) insbesondere zumindest weitgehend freitragend mit der Platte (15) verbunden ist.

5. Aufhängung nach Anspruch 4, **dadurch gekennzeichnet, dass** die erste Haltestruktur (18) über zwei, einander gegenüber liegende erste Stege (13) mit der zweiten Haltestruktur (12) verbunden ist, und/oder dass die zweite Haltestruktur (12) über zwei, einander gegenüber liegende zweite Stege (14) mit der Platte (15) verbunden ist.

6. Aufhängung nach einem der vorangehenden Ansprüche, **dadurch gekennzeichnet, dass** die erste und die zweite Haltestruktur (12, 18) jeweils eine zumindest näherungsweise ringförmige Struktur (12, 18) ist, wobei die erste Haltestruktur (18) konzentrisch innerhalb der zweiten Haltestruktur (12) angeordnet ist.

7. Aufhängung nach einem der vorangehenden Ansprüche, **dadurch gekennzeichnet, dass** das Sintergleitlager (10) in die erste Haltestruktur (18) eingesetzt, die zumindest weitgehend freitragend über zwei, einander gegenüber liegende erste Stege (13) mit der zweiten Haltestruktur (12) verbunden ist, dass die zweite Haltestruktur (12) über zwei, einander gegenüber liegende zweite Stege (14) mit der Platte (15) verbunden ist, und dass die von den ersten Stegen (13) gebildete Achse senkrecht zu der von den zweiten Stegen (14) gebildeten Achse verläuft.

8. Aufhängung nach einem der vorangehenden Ansprüche, **dadurch gekennzeichnet, dass** die erste Haltestruktur (18) insbesondere konzentrisch innerhalb der zweiten Haltestruktur (12) angeordnet ist, wobei die Haltestrukturen (12, 18), abgesehen von den ersten Stegen (13), durch die erste Haltestruktur (18) konzentrisch umgebende erste Aussparungen (16) voneinander beabstandet sind, und/oder dass die zweite Haltestruktur (12), abgesehen von den zweiten Stegen (14), durch die zweite Haltestruktur (12) insbesondere konzentrisch umgebende zweite Aussparungen (17) von der Platte (15) beabstandet ist.

9. Aufhängung nach Anspruch 8, **dadurch gekennzeichnet, dass**, abgesehen von zwei sich gegenüber liegenden ersten Stegen (13), zwei näherungsweise halbkreisringförmige erste Aussparungen (16) vorgesehen sind, und/oder dass, abgesehen von zwei sich gegenüber liegenden zweiten Stegen (14), zwei näherungsweise halbkreisringförmige zweite Aussparungen (17) vorgesehen sind

10. Aufhängung nach einem der vorangehenden Ansprüche, **dadurch gekennzeichnet, dass** die Haltestrukturen (12, 18) und die Stege (13, 14) aus der Platte (15) herausstrukturiert, insbesondere gestanzt, sind, und dass die Platte (15), die Haltestrukturen (12, 18) und die Stege (13, 14) einstückig ausgebildet sind.

11. Aufhängung nach einem der vorangehenden Ansprüche, **dadurch gekennzeichnet, dass** das in die Haltestruktur (18) eingesetzte Sintergleitlager (10) gegenüber dieser vor einem Verdrehen gesichert ist.

12. Aufhängung nach Anspruch 11, **dadurch gekennzeichnet, dass** die Haltestruktur (18) oder das Sintergleitlager (10) eine Nut und das jeweils andere dieser Bauteile einen in die Nut eingreifenden Steg aufweist.

13. Aufhängung nach einem der vorangehenden Ansprüche, **dadurch gekennzeichnet, dass** die Platte (15) mit einem Tragkörper, einer Halterung oder einem Gehäuse verbunden ist.
